(19) **Europäisches Patentamt / European Patent Office / Office européen des brevets**

(11) **EP 2 656 454 B1**

(12) **FASCICULE DE BREVET EUROPEEN**

(45) Date de publication et mention
de la délivrance du brevet:
**09.08.2017 Bulletin 2017/32**

(51) Int Cl.:
*H01S 3/00* (2006.01)     *H01S 3/23* (2006.01)
*H01S 3/13* (2006.01)     *G02F 1/03* (2006.01)

(21) Numéro de dépôt: **11815509.2**

(22) Date de dépôt: **21.12.2011**

(86) Numéro de dépôt international:
**PCT/FR2011/053137**

(87) Numéro de publication internationale:
**WO 2012/085467 (28.06.2012 Gazette 2012/26)**

(54) **LASER IMPULSIONNEL FEMTOSECONDE STABILISE ET PROCEDE DE STABILISATION**

STABILISIERTE GEPULSTE FEMTOSEKUNDENLASER UND STABILISIERUNGSVERFAHREN

STABILIZED FEMTOSECOND PULSED LASER AND STABILIZATION METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2010 FR 1005177**

(43) Date de publication de la demande:
**30.10.2013 Bulletin 2013/44**

(73) Titulaires:
• **Amplitude Technologies
91090 Lisses (FR)**
• **Commissariat à l'Énergie Atomique
et aux Énergies Alternatives
75015 Paris (FR)**

(72) Inventeurs:
• **GOBERT, Olivier
F-28320 Gallardon (FR)**
• **COMTE, Michel
F-92160 Antony (FR)**
• **PAUL, Pierre-Mary
F-91210 Draveil (FR)**
• **HERGOTT, Jean-François
F-92240 L'hay-Les-Roses (FR)**

(74) Mandataire: **Jacobacci Coralis Harle
32, rue de l'Arcade
75008 Paris (FR)**

(56) Documents cités:
• **HE WANG ET AL: "Power locking of
high-repetition-rate chirped pulse amplifiers",
APPLIED PHYSICS B ; LASERS AND OPTICS,
SPRINGER, BERLIN, DE, vol. 89, no. 2-3, 7
septembre 2007 (2007-09-07), pages 275-279,
XP019562056, ISSN: 1432-0649, DOI:
10.1007/S00340-007-2774-8**
• **GOBERT O ET AL: "Carrier-envelope phase
control using linear electro-optic effect", OPTICS
EXPRESS OPTICAL SOCIETY OF AMERICA USA,
vol. 19, no. 6, 8 mars 2011 (2011-03-08), pages
5410-5418, XP002657577, ISSN: 1094-4087**
• **NAKAJIMA Y ET AL: "A low-noise,
octave-spanning optical frequency comb
generated by a mode-locked fiber laser with an
intracavity electro-optic modulator", LASERS
AND ELECTRO-OPTICS, 2009 AND 2009
CONFERENCE ON QUANTUM ELECTRONICS
AND LASER SCIENCE CONFERENCE.
CLEO/QELS 2009. CONFERENCE ON, IEEE,
PISCATAWAY, NJ, USA, 2 juin 2009 (2009-06-02),
pages 1-2, XP031521910, ISBN:
978-1-55752-869-8**
• **ADACHI S ET AL: "Carrier-Envelope Phase
Control of Few-Cycle Parametric Chirped-Pulse
Amplifier", JAPANESE JOURNAL OF APPLIED
PHYSICS JAPAN SOCEITY OF APPLIED
PHYSICS JAPAN, vol. 49, no. 3, mars 2010
(2010-03), XP002657702, ISSN: 0021-4922**

- ZHIHAO YU ET AL: "Spatial distribution of carrier-envelope phase for femtosecond pulsed laser beam profile determined by asymmetric spectral interferometry", OPTICS LETTERS OPTICAL SOCIETY OF AMERICA USA, vol. 35, no. 13, 1 juillet 2010 (2010-07-01), pages 2275-2277, XP002657669, ISSN: 0146-9592

- GREBING C ET AL: "Isochronic and isodispersive carrier-envelope phase-shift compensators", APPLIED PHYSICS B: LASERS AND OPTICS SPRINGER BERLIN GERMANY, vol. 97, no. 3, novembre 2009 (2009-11), pages 575-581, XP002657703, ISSN: 0946-2171 cité dans la demande

**Description**

Le domaine de l'invention concerne les lasers à impulsion ultracourtes (régime femtoseconde). Plus précisément, l'invention concerne un laser à impulsions femtosecondes (fs), caractérisé par une fréquence porteuse et par une fréquence d'enveloppe. Plus précisément encore, l'invention concerne un moyen de stabiliser la dérive de phase entre la fréquence porteuse et la fréquence d'enveloppe d'un train d'impulsions laser femtosecondes.

Depuis une vingtaine d'années, la recherche et le développement des lasers à impulsions courtes ont considérablement progressé. Les durées d'impulsions obtenues appartiennent actuellement au domaine des femtosecondes. Parallèlement, le développement de la technique d'amplification à dérive de fréquence (D.Strickland, G.Mourou "Compression of amplified chirped optical pulses" Optics communications, vol.55, issue 6, 15 October 1985, p.447-449 & Optics communications, vol.56, issue 3, 1 December 1985 p.219-221) a permis d'atteindre des puissances crêtes très élevées, de l'ordre du pétaWatt.

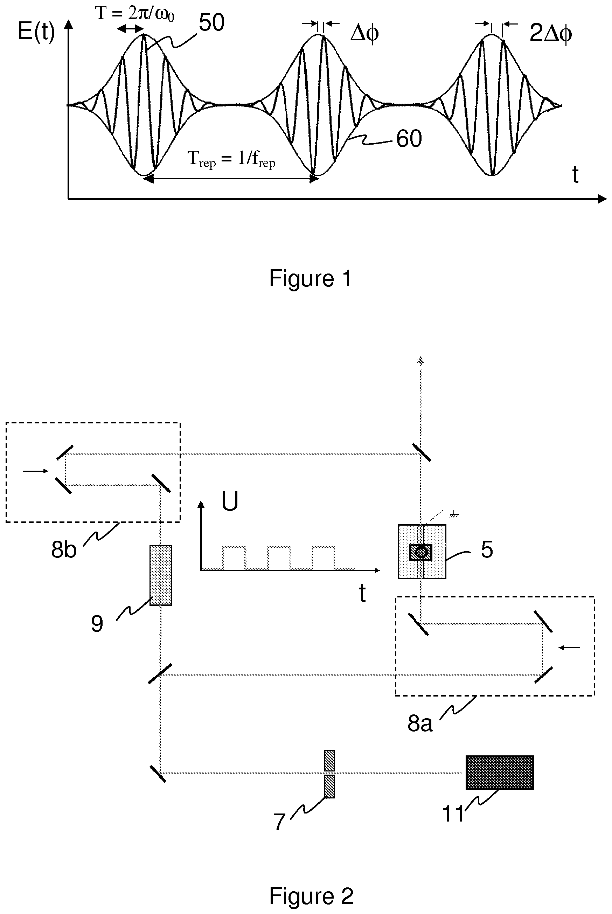

L'un des axes de recherche sur ce type de sources concerne le phénomène dit de dérive de phase entre enveloppe et porteuse, illustré schématiquement sur la figure 1. Une onde lumineuse issue d'un laser est une onde électromagnétique dont le champ électrique peut être représenté par le produit d'une onde à une fréquence donnée, l'onde porteuse (50), par une fonction enveloppe (60). La fréquence de l'onde porteuse (50) est directement liée à la longueur d'onde du laser, tandis que l'enveloppe (60) permet de caractériser la durée des impulsions et la fréquence de répétition ($f_{rep}$) des impulsions. La vitesse de propagation de l'enveloppe (60) est appelée vitesse de groupe et correspond à la vitesse de propagation de l'énergie. Celle de la fréquence porteuse (50) est appelée vitesse de phase. Dans un milieu dispersif, les vitesses de groupe et de phase sont généralement différentes, ce qui peut induire une dérive temporelle de l'oscillation de la porteuse à l'intérieur de l'enveloppe (cffigure 1).

Pour des durées d'impulsions relativement « longues », c'est-à-dire par exemple de l'ordre de la nanoseconde, chaque impulsion contient un très grand nombre de cycles optiques (de l'ordre $3.10^5$ cycles dans le spectre visible), et la dérive entre la fréquence de la porteuse et la fréquence de l'enveloppe n'a pas de conséquence notable. Dans le cas des impulsions laser ultracourtes, le nombre de cycles optiques est au contraire peu élevé (*cf.* Figure 1) et la position temporelle de la porteuse dans l'enveloppe peut avoir des conséquences importantes sur certains phénomènes physiques sensibles au champ électrique et non pas à l'enveloppe du champ (A. Baltuska et al. "Attosecond control of electronic processes by intense light fields" Nature 421 - 2003).

Si le maximum du champ électrique coïncide avec la position du maximum de l'enveloppe pour une impulsion donnée, cela peut ne plus être le cas à l'impulsion suivante. Ce décalage en temps correspond à un déphasage $\Delta\phi$ de la porteuse et il est aussi désigné par l'acronyme CEP (Carrier Envelope Phase). Le déphasage $\Delta\phi$ peut varier dans le temps suivant l'apparition de perturbations d'origine diverses sur le chemin optique du laser (vibrations, variations d'indice de réfraction des matériaux...). On appelle « dérive de phase entre fréquence d'enveloppe et fréquence porteuse » les variations du déphasage $\Delta\phi$, c'est-à-dire les variations de CEP, en fonction du temps. Ceci est par exemple illustré dans la publication de Nisoli *et al* qui décrit la mesure des variations aléatoires de CEP tir à tir, pour des impulsions de durée comprise entre 5 et 7fs (« Effects of Carrier-Envelope Phase Différences of Few-Optical-Cycle Light Pulses in Single-Shot High-Order-Harmonic Spectra » Phys. Rev. Letters, Vol. 91, n° 21, 2003). Un autre exemple est décrit dans la publication de Z. Chang ("Carrier-envelope phase shift caused by grating-based stretchers and compressors" Applied Optics, vol.45, n°32, 2006) dans laquelle est évaluée l'influence d'un étireur ou compresseur à réseaux de diffraction sur la dérive de CEP. Un autre exemple de stabilisation de la dérive de CEP est illustré dans la publication de H.Wang ("Power locking of high-repetition-rate chirped pulse amplifiers" Applied Physics B, vol. 89, n° 2-3, pages 275-279, 7 Septembre 2007). Le problème technique que l'on traite ici concerne d'une manière générale la stabilisation et le contrôle de la dérive de phase entre fréquence enveloppe et fréquence porteuse d'impulsions laser ultra-courtes.

En dehors du cas particulier des oscillateurs paramétriques optiques qui dans certaines conditions spécifiques (A.Baltuska et al "Controlling the Carrier-Envelope Phase of Ultrashort Light Pulses with Optical Parametric Amplifiers" Physical Review Letters, Vol.88, n°13, 1 April 2002.) permettent de s'affranchir d'une manière élégante des dérives de la CEP, différentes techniques de corrections de la CEP existent, fondées sur une boucle de contre réaction lente contenant un interféromètre f-2f (Kakehata et al "Measurements of carrier-envelope phase changes of 100-Hz amplified laser pulses" Applied Physics B.74, S43-S50 2002). On peut les regrouper en deux catégories.

La première concerne les oscillateurs à modes bloqués et la correction est faite en agissant sur certains paramètres de la cavité (Jones et al "Carrier Envelope Phase Control of Femtosecond Mode-Locked Lasers and Direct Optical Frequency Synthesis" Science 288,635,2000). Notons que cette méthode ne permet pas avec une seule boucle d'asservissement de corriger des éventuelles fluctuations de CEP en aval de la cavité, liées par exemple à des perturbations sur le trajet ultérieur du faisceau laser.

La seconde catégorie qui suppose une stabilisation préalable de l'oscillateur correspond à des corrections réalisées en aval de celui-ci, généralement avant l'amplification. Parmi les principales techniques employées, on peut citer :

- l'utilisation d'une paire de lames prismatiques dans un matériau dispersif. Le déplacement mécanique des lames permet de modifier la CEP (C. Grebing et al, "Isochronic and isodispersive carrier-envelope phase-shift compensators", Applied Physics B 97, p. 575-581, 2009). Toutefois, la nécessité d'un mouvement mécanique ne permet qu'une correction de la dérive de phase relativement lente ;
- la modification d'un paramètre du compresseur ou de l'étireur, ce paramètre pouvant être la distance entre deux réseaux ou entre deux prismes (Chang, "Carrier-envelope phase shift caused by grating-based stretchers and compressors" Applied Optics, vol.45, n°32, 2006, p. 8350-8353). Là encore, la nécessité d'un mouvement mécanique de précision interférométrique limite en vitesse le dispositif.
- l'utilisation d'un filtre dispersif acousto-optique programmable (AOPDF) (P.Tournois "Acousto-optic programmable dispersive filter for adaptive compensation of group delay time dispersion in laser systems" Optics communications 140 245-249 (1997)). Un tel filtre dispersif acousto-optique permet d'induire un déphasage programmable avec un temps de réponse rapide (kHz) mais le coût d'un tel dispositif est élevé ;
- l'utilisation d'un système 4f avec une matrice de cristaux liquides (Spatial Light Modulator) (M.Kakehata et al « Use of a 4f pulse shaper as an active carrier-envelope phase shifter » Conference paper, CLEO 2004, CTuP, CTuP31). Le temps de réponse est important et ne permet pas de corriger la dérive de CEP tir à tir.

Un des buts de l'invention est de fournir un dispositif et un procédé de stabilisation de la CEP applicable aux lasers à amplification à dérive de fréquence de haute énergie fonctionnant à des fréquences de répétition élevées (de l'ordre du kHz au MHz) et de coût réduit.

Dans le présent document, on entend par impulsions laser de haute énergie, des impulsions lasers ayant une énergie supérieure au nanojoule.

L'invention concerne un laser impulsionnel femtoseconde tel que décrit dans la revendication 1 ainsi qu'un procédé de stabilisation de la dérive de phase entre fréquence d'enveloppe et fréquence porteuse d'un laser impulsionnel femtoseconde tel que décrit dans la revendication 9.

Plus précisément, l'invention concerne un laser impulsionnel femtoseconde de haute énergie stabilisé en dérive de phase entre fréquence d'enveloppe et fréquence porteuse, ledit laser comprenant une source d'impulsions laser à amplifier, ladite source étant apte à générer un train d'impulsions laser d'entrée ayant une fréquence d'enveloppe et une fréquence porteuse, des moyens d'amplification à dérive de fréquence comprenant des moyens d'étirement aptes à étirer temporellement les impulsions laser d'entrée, des moyens optiques d'amplification aptes à amplifier les impulsions laser étirées et des moyens de compression aptes à comprimer temporellement les impulsions laser amplifiées, et des moyens de contrôle de la dérive de phase entre fréquence d'enveloppe et fréquence porteuse des impulsions laser de sortie. Selon l'invention, lesdits moyens de contrôle de la dérive de phase entre fréquence d'enveloppe et fréquence porteuse comprennent des moyens électro-optiques de modulation de phase, lesdits moyens électro-optiques de modulation de phase étant disposés en configuration transverse dans laquelle un champ électrique est appliqué suivant une direction Ox, lesdits moyens électro-optiques de modulation de phase étant disposés sur un trajet optique des impulsions laser polarisées linéairement selon ladite direction Ox, de manière à stabiliser la dérive de phase entre fréquence d'enveloppe et fréquence porteuse des impulsions laser de sortie (40) en fonction du temps. Selon un premier mode de réalisation de l'invention, lesdits moyens électro-optiques de modulation comprennent un modulateur de phase électro-optique à effet Pockels en configuration transverse.

Selon différents aspects particuliers du premier mode de réalisation de l'invention :

- le laser comprend en outre des moyens d'orientation angulaire des axes optiques ordinaire et/ou extraordinaire dudit modulateur à effet Pockels relativement à une direction de polarisation des impulsions laser ;
- ledit modulateur à effet Pockels est disposé sur le trajet optique des moyens d'amplification à dérive de fréquence.

Selon un second mode de réalisation de l'invention, lesdits moyens d'étirement et/ou lesdits moyens de compression comprennent au moins un prisme et lesdits moyens électro-optiques de modulation comprennent des électrodes déposées respectivement sur des faces dudit prisme et des moyens d'application d'un champ électrique aux bornes desdites électrodes de manière à induire une modulation de l'indice de réfraction dudit prisme.

Selon un aspect particulier du second mode de réalisation de l'invention, lesdits moyens d'étirement et/ou lesdits moyens de compression comprennent respectivement deux prismes disposés de manière à compenser un décalage spatial du faisceau optique et lesdits moyens électro-optiques de modulation comprennent des électrodes déposées respectivement sur des faces desdits deux prismes et des moyens d'application d'un champ électrique aux bornes des électrodes des deux prismes de manière à moduler l'indice de réfraction des deux primes.

Selon différents aspects particuliers de l'invention,

- lesdits moyens électro-optiques de modulation ont une fréquence de fonctionnement comprise entre quelques Hz à plusieurs MHz ;

- le laser comprend en outre des moyens de mesure de la dérive de phase entre fréquence d'enveloppe et fréquence porteuse des impulsions laser de sortie en fonction du temps ; et/ou
- le laser comprend en outre une boucle de contre-réaction de manière à ajuster la modulation induite par lesdits moyens électro-optiques en fonction de la mesure de la dérive de phase entre fréquence d'enveloppe et fréquence porteuse.

L'invention concerne aussi un procédé de stabilisation de la dérive de phase entre fréquence d'enveloppe et fréquence porteuse d'un laser impulsionnel femtoseconde de haute énergie (supérieure au nanojoule), ledit procédé comprenant les étapes suivantes :

- génération d'un train d'impulsions laser d'entrée formé d'une fréquence d'enveloppe et d'une fréquence porteuse ;
- amplification à dérive de fréquence desdites impulsions laser d'entrée comprenant une étape d'étirement temporel desdites impulsions laser d'entrée, une étape d'amplification optique desdites impulsions laser étirées et une étape de compression temporelle desdites impulsions laser étirées et amplifiées, et
- ladite étape d'amplification à dérive de fréquence comprenant une étape de stabilisation de la dérive de phase entre fréquence d'enveloppe et fréquence porteuse des impulsions laser de sortie.

Selon le procédé de l'invention, ladite étape de stabilisation de la dérive de phase entre fréquence d'enveloppe et fréquence porteuse comprend une modulation électro-optique de phase via un composant électro-optique disposé sur un trajet optique des impulsions laser polarisées linéairement suivant une direction Ox et application d'un champ électrique suivant ladite direction Ox sur ledit composant électro-optique à modulation de phase, de manière à stabiliser la dérive de phase entre fréquence d'enveloppe et fréquence porteuse des impulsions laser de sortie en fonction du temps. Selon un aspect particulier du procédé de l'invention, ledit procédé comprend en outre :

- une étape de mesure de la dérive de phase entre fréquence d'enveloppe et fréquence porteuse des impulsions laser de sortie en fonction du temps, et
- une étape d'ajustement de la modulation électro-optique de phase par contre-réaction en fonction de ladite mesure de la dérive de phase entre fréquence d'enveloppe et fréquence porteuse.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :

- la figure 1 représente schématiquement une onde électromagnétique définie par une fréquence porteuse et une fréquence d'enveloppe ;
- la figure 2 représente schématiquement la première configuration utilisée (interférométrie spectrale) pour la mise en évidence de la correction de la CEP selon un premier mode de réalisation de l'invention ;
- la figure 3 représente un exemple des franges observées par interférométrie spectrale, en présence de tension appliquée au cristal de $LiNbO_3$ (V = 240 Volt) et sans tension ;
- la figure 4 représente la variation de CEP mesurée par interférométrie spectrale en fonction de la tension appliquée sur le cristal ;
- la figure 5 représente schématiquement un dispositif laser à amplification à dérive de fréquence utilisé pour mettre en évidence la correction de la CEP selon un premier mode de réalisation ;
- la figure 6 représente des mesures tir à tir de la réponse en CEP d'un modulateur électro-optique utilisé dans un mode de réalisation de l'invention ;
- la figure 7 représente des mesures de franges d'interférence par interférométrie f-2f pour différentes formes de modulations de tension appliquées à un modulateur électro-optique, respectivement une tension sinusoïdale (Fig. 7A), une tension en dents de scie (Fig. 7B), une tension de forme rectangulaire (Fig. 7C) ;
- la figure 8 représente différentes courbes de mesure de CEP en fonction de différentes fréquences de modulation ;
- la figure 9A représente schématiquement un dispositif de modulation de CEP suivant un second mode de réalisation de l'invention et la figure 9B représente schématiquement une vue en perspective d'un prisme utilisé dans le second mode de réalisation.

## Premier mode de réalisation

Le premier mode de réalisation repose sur la modulation de la CEP d'impulsions optiques au moyen de l'utilisation d'un seul composant optoélectronique. Plus précisément, le premier mode de réalisation repose sur l'utilisation d'un modulateur de type électro-optique dont nous allons détailler le principe. Considérons une impulsion laser se propageant dans un élément optique dispersif. Le temps de phase $T_\varphi$ et le temps de groupe Tg sont définis respectivement par les équations suivantes (1.a) et (1.b) :

$$T_\varphi = \frac{n(\omega_0).L}{c} \qquad (1.a.)$$

$$T_g = \frac{n_g(\omega_0).L}{c} \qquad (1.b)$$

où c représente la vitesse de la lumière dans le vide, L la longueur traversée par le faisceau optique dans l'élément dispersif, $\omega_0$ est la fréquence (angulaire) centrale du laser, $n(\omega_0)$ et $ng(\omega_0)$ étant respectivement l'indice de réfraction et l'indice de groupe du milieu à la fréquence $\omega_0$.

Le retard induit par la différence entre la vitesse de groupe et la vitesse de phase peut donc s'écrire selon l'équation (2) :

$$T_g - T_\varphi = \left[ n_g(\omega_0) - n(\omega_0) \right] \frac{L}{c} \qquad (2)$$

L'indice de groupe ng est relié au module du vecteur d'onde k $\left[ k = \dfrac{n\omega}{c} \right]$ par la relation (3a) :

$$\frac{n_g(\omega_0)}{c} = \left. \frac{\partial k}{\partial \omega} \right|_{\omega_0} \qquad (3a)$$

Ce qui permet d'exprimer l'indice de groupe en fonction de l'indice de réfraction et de la longueur d'onde $\lambda_0$ :

$$n_g(\omega_0) = n(\lambda_0) - \lambda_0 \left. \frac{\partial n}{\partial \lambda} \right|_{\lambda_0} \qquad (3b)$$

L'équation (2) peut donc être exprimée sous la forme de l'équation (4) :

$$T_g - T_\varphi = -\lambda_0 \cdot \left. \frac{\partial n}{\partial \lambda} \right|_{\lambda_0} \cdot \frac{L}{c} \qquad (4)$$

Un champ électrique E appliqué à un milieu génère une variation de l'indice de réfraction par effet Pockels en configuration transverse. Nous considérons ici une impulsion optique se propageant par exemple dans un cristal de niobate de lithium ($LiNbO_3$) selon la direction Oz. Toutefois, le même principe est applicable à d'autres cristaux non linéaires présentant l'effet Pockels comme le RTP, le KTA etc.... Le champ laser est supposé polarisé linéairement selon la direction Ox de même que le champ électrique appliqué et l'axe Ox correspond à l'axe extraordinaire. Le champ électrique appliqué est ainsi transverse à l'axe de propagation du faisceau impulsionnel. Les indices ordinaires $n_o$ et extraordinaires ne sont alors donnés en fonction du champ électrique E et des éléments du tenseur électro-optique $r_{13}$ et $r_{33}$ par les relations suivantes :

$$n_0(E) = n_0 - \frac{1}{2} \cdot n_0^3 \cdot r_{13} \cdot E \qquad (5.1)$$

$$n_e(E) = n_e - \frac{1}{2} \cdot n_e^3 \cdot r_{33} \cdot E \qquad (5.2.)$$

En utilisant la relation (5.2), on obtient donc la variation du retard (induit par l'écart entre vitesses de groupe et de phase) lorsque le champ électrique est appliqué :

$$(T_g - T_\varphi)[E] - (T_g - T_\varphi)[E = 0] = \lambda_0 \left[ \frac{3}{2} n_e^2(\lambda_0) . r_{33}(\lambda_0) . \frac{\partial n_e}{\partial \lambda} \bigg|_{\lambda_0} + \frac{n_e^3(\lambda_0)}{2} \frac{\partial r_{33}}{\partial \lambda} \bigg|_{\lambda_0} \right] \frac{E.L}{c} \quad (6)$$

Ceci permet en définitive d'écrire la variation de la CEP sous la forme suivante :

$$\Delta\varphi_{CEP} = \omega_0 \cdot \lambda_0 \left[ \frac{3.}{2} \cdot n_e^2(\lambda_0) \cdot r_{33}(\lambda_0) \cdot \frac{\partial n_e}{\partial \lambda} \bigg|_{\lambda_0} + \frac{n_e^3(\lambda_0)}{2} \frac{\partial r_{33}}{\partial \lambda} \bigg|_{\lambda_0} \right] . \frac{E.L}{c} \qquad (7)$$

La dérive de phase entre fréquence d'enveloppe et fréquence porteuse $\Delta\varphi_{CEP}$ est donc une fonction linéaire du champ électrique E appliqué aux bornes du modulateur électro-optique.

En appliquant une tension adéquate à un tel modulateur, il est donc possible de corriger la variation de CEP d'un laser à impulsions ultra-courtes. Si ce dispositif est associé à une boucle de contre réaction, il est possible d'asservir la CEP.

### Dispositif expérimental de contrôle de la CEP

Deux dispositifs expérimentaux différents ont été employés pour tester les performances d'un modulateur électro-optique de Pockels en configuration transverse constitué par exemple d'un cristal de niobate de lithium ($LiNbO_3$). Un dépôt métallique d'or a été effectué sur les faces du cristal dans la direction Oy, selon laquelle la tension peut être appliquée. Le rayonnement laser est polarisé linéairement selon la direction Ox.

### Premier dispositif

La démonstration est fondée sur des mesures d'interférométrie spectrale. On utilise un laser (11) à spectre en fréquence large tel que par exemple le modèle commercial « SuperK™ Compact » commercialisé par « NKT photonics ». Ce laser fonctionne à un taux de répétition de 24kHz, le spectre du rayonnement émis s'étend de 600 à 900nm, la durée des impulsions est de l'ordre de la ns et la puissance moyenne délivrée est d'environ 100 mW. La figure 2 représente un laser (11) couplé à un interféromètre de type Mach-Zehnder utilisé pour mesurer la variation de la phase spectrale du rayonnement induite par le cristal de niobate de lithium (5) auquel est appliqué un champ électrique U(t), représenté schématiquement sous forme d'un graphe dans la figure 2. Le modulateur de phase électro-optique (5) est inséré dans l'un des bras de l'interféromètre et l'on compense dans l'autre bras les effets de la dispersion de phase du second ordre avec un matériau dispersif de longueur adéquate (la phase d'ordre 1 étant compensée via une ligne à retard optique 8a ou 8b). Après recombinaison, le faisceau est envoyé dans un spectromètre qui permet d'accéder directement à la variation de CEP induite par le modulateur.

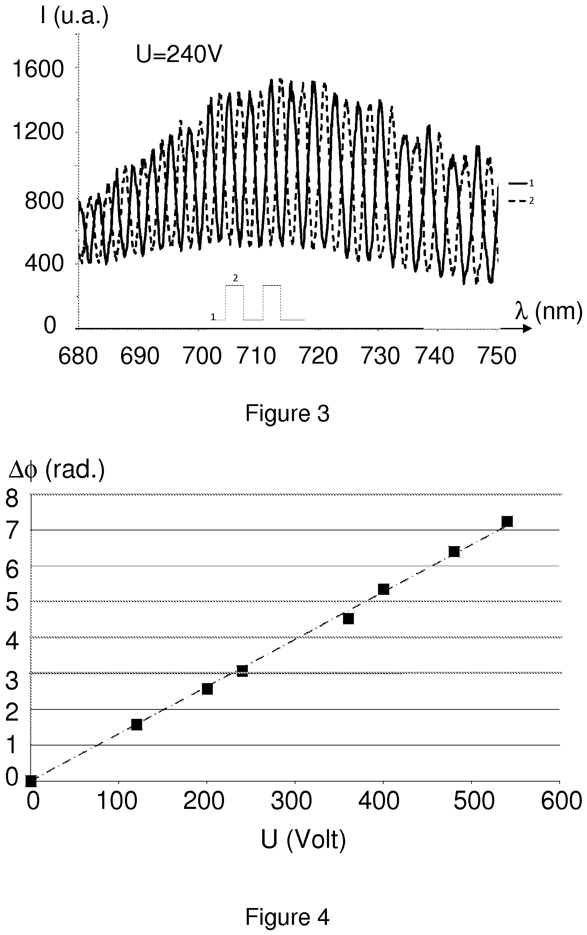

La tension est appliquée pendant une durée de l'ordre de quelques centaines de ms. Un diaphragme (7) commandé à partir du générateur de tension, permet de sélectionner le rayonnement pendant deux séquences de temps, l'une correspondant au moment où la tension est appliquée (U(t) ≠ 0) et l'autre où elle ne l'est pas (U(t) = 0). Dans ces conditions, il est possible d'enregistrer dans le plan de sortie du spectromètre et pour comparaison, une image des franges d'interférence correspondant à la présence de la tension (courbe en pointillés de la figure 3) en superposition avec une image sans tension (courbe en trait plein de la figure 3), comme présenté par exemple sur la figure 3.

En faisant varier l'amplitude de la tension U appliquée au cristal (5) du modulateur electro-optique de Pockels en configuration transverse, on peut tracer la variation de la CEP en fonction du champ électrique. La figure 4 représente des mesures de CEP (représentées par des carrés) pour différentes valeurs de champ électrique appliqué au modulateur électro-optique ainsi qu'une courbe de régression linéaire (courbe en trait tiret-point). On peut aussi déterminer le coefficient qui relie la tension appliquée et la variation de phase qui en résulte.

**Second dispositif**

Dans un second dispositif, le système électro-optique (5) de Pockels en configuration transverse est placé sur le trajet d'un laser à amplification à dérive de fréquence de type Titane-Saphir, dont l'oscillateur à modes bloqués est stabilisé en CEP. La variation de la CEP est mesurée directement en fonction du champ électrique appliqué au moyen d'un interféromètre f-2f rapide développé en interne permettant des mesures tir à tir à une fréquence supérieure au kHz.

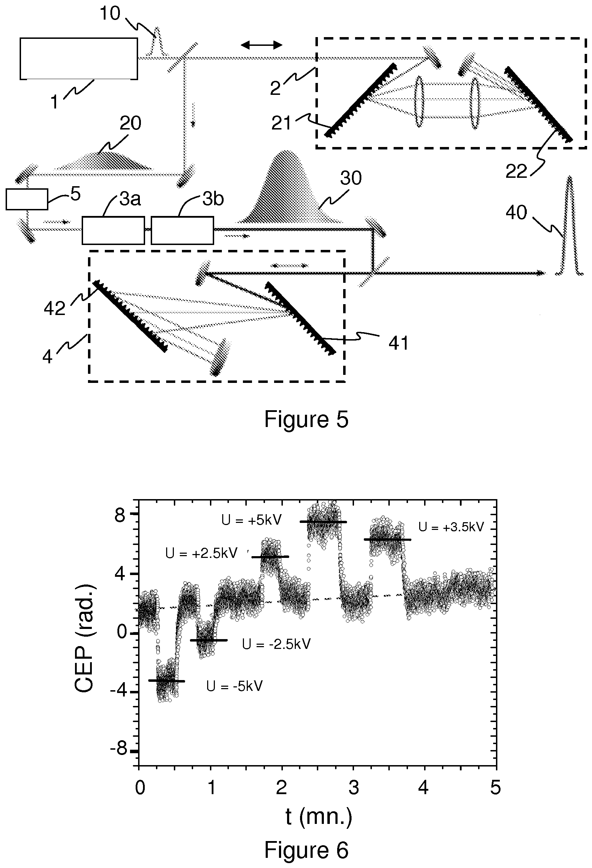

La figure 5 représente schématiquement le système laser selon ce second dispositif. Il comprend un oscillateur à modes bloqués (1), un étireur (2), un ou plusieurs étages d'amplification (3a, 3b) et un compresseur (4). Dans l'exemple illustré sur la figure 5, l'étireur (2) et le compresseur (4) sont basés sur des réseaux de diffraction (21, 22, 41, 42). L'oscillateur (1) délivre des impulsions ultracourtes (10) avec un taux de répétition de l'ordre de 100 MHz, une énergie d'environ 1 nJ et une largeur spectrale de quelques dizaines de nm. Le système laser délivre au final des impulsions amplifiées et recomprimées (40) de 2mJ dont la durée est voisine de 35fs. Le bruit résiduel tir à tir en CEP après amplification est d'environ 320 mrad (sur une période d'une heure). Le modulateur électro-optique (5) est placé entre l'étireur (2) et l'amplificateur régénératif (3a, 3b).

La figure 6 représente des mesures de l'évolution de la CEP tir à tir en fonction du temps. Les différentes marches correspondent à différentes tensions électriques (U = -5kV ; U = -2.5kV ; U = +2.5kV ; U = +5kV ; U = 3.5 kV) appliquées sur le modulateur électro-optique (5). Le trait pointillé représente la dérive lente de CEP en fonction du temps.

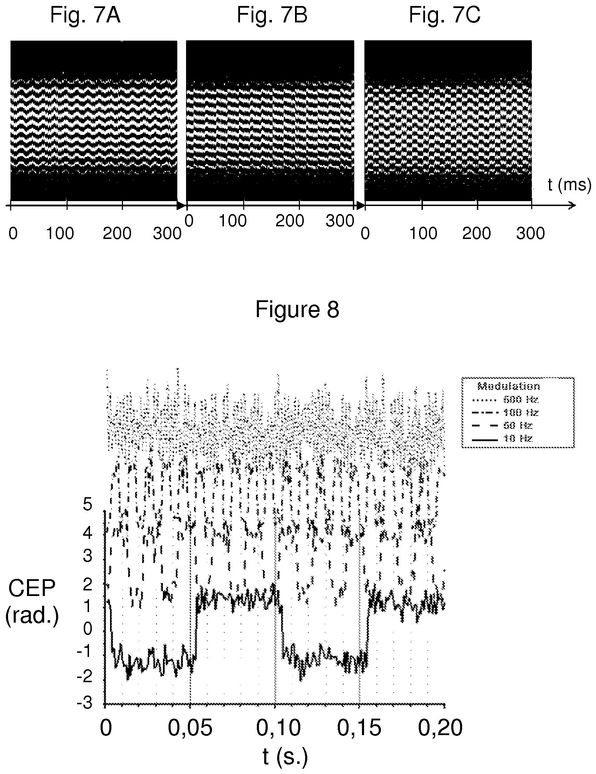

Ce dispositif permet a priori de moduler la CEP à un taux de répétition supérieur au kHz et pour le vérifier, nous avons appliqué au cristal plusieurs tensions en fonction du temps. La figure 7 représente l'évolution périodique de la CEP observée expérimentalement via les franges de l'interféromètre f-2f, lorsque la tension appliquée au cristal est modulée sinusoïdalement (Fig. 7A), par un signal en dent de scie (Fig. 7B) ou par un signal en créneau (Fig. 7C). Ces mesures sont obtenues en sortie d'une chaîne TiS à amplification à dérive de fréquence stabilisée en CEP, utilisant un étireur et un compresseur à réseaux.

La figure 8 trace l'évolution de la CEP imposée par la modulation sur le champ électrique et déduite des franges observées par l'interféromètre f-2f. Pour plus de lisibilité, les phases sont décalées suivant l'axe des ordonnées. La courbe en trait plein correspond à une fréquence du modulateur électro-optique de 10 Hz, la courbe en traits tiretés à une fréquence de 50 Hz, la courbe en traits point-tiret à une fréquence de 100 Hz et enfin la courbe en pointillés à une fréquence de 500 Hz. On observe bien une modulation de la CEP à des fréquences allant de quelques Herz à plusieurs centaines de Herz.

**Deuxième mode de réalisation**

Un deuxième mode de réalisation de dispositif de l'invention repose sur l'utilisation d'un compresseur à prismes et sur la modification de l'indice de réfraction des prismes d'un compresseur par effet électro-optique pour le contrôle de la CEP.

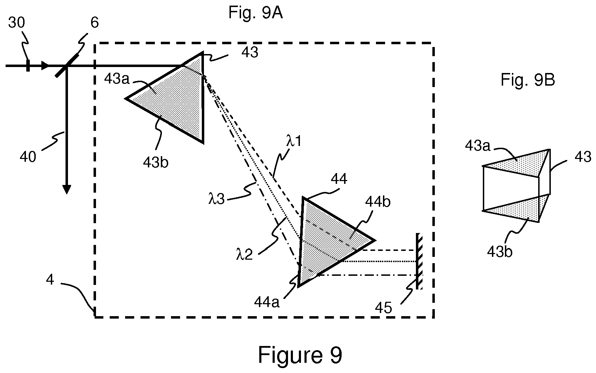

Considérons par exemple un compresseur à prismes dans une configuration à double passage tel que représenté schématiquement sur la figure 9A. Le compresseur (4) comprend un premier prisme (43), un second prisme (44) et un miroir (45). Une impulsion d'entrée (30) est représentée schématiquement par un trait plein transverse à l'axe du faisceau optique. Une lame séparatrice (6) permet de séparer le faisceau incident et le faisceau en sortie du compresseur. De manière connue en soi, le premier prisme (43) disperse spatialement l'impulsion d'entrée en fonction des longueurs d'onde présentes dans le spectre de l'impulsion. En sortie du premier prisme on a représenté de manière accentuée trois faisceaux (respectivement $\lambda_1$, $\lambda_2$ et $\lambda_3$) séparés spatialement. Le deuxième prisme (44) induit aussi une dispersion des faisceaux. Après réflexion sur le miroir (45) et retraversée du second prisme (44) puis du premier prisme (43), les trois faisceaux ($\lambda_1$, $\lambda_2$ et $\lambda_3$) se recombinent spatialement mais avec un décalage temporel, car ils n'ont pas suivi les mêmes chemins optiques. L'impulsion de sortie (40) peut ainsi être comprimée temporellement selon la dispersion des impulsions d'entrée (30).

En déposant une couche métallique (43a, 43b, 44a, 44b) sur les faces opposées du prisme (43 et/ou 44) (cf. figure 9B), on forme des électrodes. Le champ électrique appliqué entre les électrodes est ainsi transverse à l'axe de propagation du faisceau impulsionnel. Il est alors possible (via l'application d'une tension électrique) de moduler par effet électro-optique, l'indice de réfraction du prisme (43 et/ou 44) et ainsi de moduler la dispersion introduite par le compresseur (4). En appliquant la même tension électrique sur les deux prismes (43 et 44), le système reste complètement symétrique et n'induit pas de variation sur le pointé du faisceau laser. En utilisant quatre prismes (chacun des prismes précédents étant alors composé de deux prismes) et en décalant en hauteur le trajet aller et retour du faisceau dans le compresseur, la tension électrique appliquée sur chacun des prismes peut ainsi être divisée par deux, pour un même effet de déphasage.

Les calculs de la variation de la différence entre le délai de phase et le délai de groupe en fonction du champ électrique appliqué montrent que cette méthode permet effectivement de contrôler le CEP.

L'invention propose plusieurs modes de réalisation de dispositifs simples et relativement bon marché pour la correction rapide de la CEP, en particulier applicables aux lasers à amplification à dérive de fréquence de haute énergie. Les dispositifs et le procédé de l'invention permettent une correction de la CEP d'un laser à impulsions ultracourtes (femtosecondes). De plus, l'invention permet une correction tir à tir de la CEP à des fréquences très élevées, allant de quelques Hz à plusieurs MHz. Le dispositif peut être avantageusement utilisé à une fréquence allant de plusieurs dizaines de kHz à plusieurs MHz pour stabiliser la dérive en CEP d'un laser à impulsion dont le taux de répétition est compris dans cette même gamme de fréquence, ce que ne permettent pas les dispositifs basés sur l'insertion de composants optiques (lames prismatiques ou autres modifications opto-mécaniques).

Les dispositifs et le procédé de l'invention peuvent être utilisés sur un laser CPA de l'art antérieur.

**Revendications**

1. Laser impulsionnel femtoseconde de haute énergie stabilisé en dérive de phase entre fréquence d'enveloppe et fréquence porteuse, ledit laser comprenant :

   - une source (1) d'impulsions laser à amplifier, ladite source (1) étant apte à générer un train d'impulsions laser d'entrée (10) ayant une fréquence d'enveloppe (60) et une fréquence porteuse (50);
   - des moyens d'amplification à dérive de fréquence comprenant des moyens d'étirement (2) aptes à étirer temporellement les impulsions laser d'entrée (10), des moyens optiques d'amplification (3, 3a, 3b) aptes à amplifier les impulsions laser étirées (20) et des moyens de compression (4) aptes à comprimer temporellement les impulsions laser amplifiées (30), et
   - des moyens de contrôle de la dérive de phase entre fréquence d'enveloppe et fréquence porteuse des impulsions laser de sortie,

   **caractérisé en ce que** :

   - lesdits moyens de contrôle de la dérive de phase entre fréquence d'enveloppe et fréquence porteuse comprennent des moyens électro-optiques de modulation de phase, lesdits moyens électro-optiques de modulation de phase étant disposés en configuration transverse dans laquelle un champ électrique est appliqué suivant une direction Ox, lesdits moyens électro-optiques de modulation de phase étant disposés sur un trajet optique des impulsions laser polarisées linéairement selon ladite direction Ox, de manière à stabiliser la dérive de phase entre fréquence d'enveloppe et fréquence porteuse des impulsions laser de sortie (40) en fonction du temps.

2. Laser à impulsions ultracourtes selon la revendication 1 **caractérisé en ce que** lesdits moyens électro-optiques de modulation comprennent un modulateur de phase électro-optique (5) à effet Pockels en configuration transverse.

3. Laser à impulsions ultracourtes selon l'une des revendications 1 ou 2 **caractérisé en ce qu'**il comprend en outre des moyens d'orientation angulaire des axes optiques ordinaire et/ou extraordinaire dudit modulateur (5) à effet Pockels relativement à une direction de polarisation des impulsions laser.

4. Laser à impulsions ultracourtes selon l'une des revendications 2 ou 3 **caractérisé en ce que** ledit modulateur (5) à effet Pockels est disposé sur le trajet optique des moyens d'amplification à dérive de fréquence.

5. Laser à impulsions ultracourtes selon la revendication 1 **caractérisé en ce que** lesdits moyens d'étirement (2) et/ou lesdits moyens de compression (4) comprennent au moins un prisme (43, 44) et **en ce que** lesdits moyens électro-optiques de modulation comprennent des électrodes (43a, 43b, 44a, 44b) déposées respectivement sur des faces dudit prisme (43, 44) et des moyens d'application d'un champ électrique aux bornes desdites électrodes de manière à induire une modulation de l'indice de réfraction dudit prisme (43, 44).

6. Laser à impulsions ultracourtes selon la revendication 5 **caractérisé en ce que** lesdits moyens d'étirement et/ou lesdits moyens de compression comprennent respectivement deux prismes (43, 44) disposés de manière à compenser un décalage spatial du faisceau optique et **en ce que** lesdits moyens électro-optiques de modulation comprennent des électrodes (43a, 43b, 44a, 44b) déposées respectivement sur des faces desdits deux prismes (43, 44) et des moyens d'application d'un champ électrique aux bornes des électrodes des deux prismes (43, 44) de manière à moduler l'indice de réfraction des deux primes (43, 44).

7. Laser à impulsions ultracourtes selon l'une des revendications 1 à 6 **caractérisé en ce que** lesdits moyens électro-optiques de modulation ont une fréquence de fonctionnement comprise entre quelques Hz à plusieurs MHz.

**8.** Laser à impulsions ultracourtes selon l'une des revendications 1 à 7 **caractérisé en ce qu'**il comprend en outre :

- des moyens de mesure de la dérive de phase entre fréquence d'enveloppe (60) et fréquence porteuse (50) des impulsions laser de sortie en fonction du temps ;
- une boucle de contre-réaction de manière à ajuster la modulation induite par lesdits moyens électro-optiques en fonction de la mesure de la dérive de phase entre fréquence d'enveloppe et fréquence porteuse.

**9.** Procédé de stabilisation de la dérive de phase entre fréquence d'enveloppe (60) et fréquence porteuse (50) d'un laser impulsionnel femtoseconde de haute énergie, ledit procédé comprenant les étapes suivantes :

- génération d'un train d'impulsions laser d'entrée (10) formé d'une fréquence d'enveloppe (60) et d'une fréquence porteuse (50);
- amplification à dérive de fréquence desdites impulsions laser d'entrée (10) comprenant une étape d'étirement temporel desdites impulsions laser d'entrée, une étape d'amplification optique desdites impulsions laser étirées (20) et une étape de compression temporelle desdites impulsions laser étirées et amplifiées (30), et
- ladite étape d'amplification à dérive de fréquence comprenant une étape de stabilisation de la dérive de phase entre fréquence d'enveloppe (60) et fréquence porteuse (50) des impulsions laser de sortie (40),

**caractérisé en ce que** :

- ladite étape de stabilisation de la dérive de phase entre fréquence d'enveloppe et fréquence porteuse comprend une modulation électro-optique de phase via un composant électro-optique disposé sur un trajet optique des impulsions laser polarisées linéairement suivant une direction Ox et application d'un champ électrique suivant ladite direction Ox sur ledit composant électro-optique à modulation de phase, de manière à stabiliser la dérive de phase entre fréquence d'enveloppe et fréquence porteuse des impulsions laser de sortie en fonction du temps.

**10.** Procédé de stabilisation selon la revendication 9 **caractérisé en ce que** ledit procédé comprend en outre :

- une étape de mesure de la dérive de phase entre fréquence d'enveloppe et fréquence porteuse des impulsions laser de sortie en fonction du temps, et
- une étape d'ajustement de la modulation électro-optique de phase par contre-réaction en fonction de ladite mesure de la dérive de phase entre fréquence d'enveloppe et fréquence porteuse.

**Patentansprüche**

**1.** Gepulster Femtosekundenimpulslaser hoher Energie, der hinsichtlich einer Phasenverschiebung zwischen Hüllfrequenz und Trägerfrequenz stabilisiert ist, wobei der Laser

- eine Quelle (1) von zu verstärkenden Laserimpulsen, wobei die Quelle (1) dazu ausgelegt ist, eine Folge von Lasereingangsimpulsen (10) mit einer Hüllfrequenz (60) und einer Trägerfrequenz (50) zu erzeugen,
- Verstärkermittel mit Frequenzverschiebung, die Streckungsmittel (2), die dazu ausgelegt sind, die Lasereingangsimpulse (10) zeitlich zu strecken, optische Verstärkungsmittel (3, 3a, 3b), die dazu ausgelegt sind, die gestreckten Laserimpulse (20) zu verstärken, und Kompressionsmittel (4), die dazu ausgelegt sind, die verstärkten Laserimpulse (30) zu komprimieren, aufweisen, und
- Mittel zur Steuerung der Phasenverschiebung zwischen Hüllfrequenz und Trägerfrequenz der Laserausgangsimpulse aufweist,

**dadurch gekennzeichnet, daß**

- die Mittel zur Steuerung der Phasenverschiebung zwischen Hüllfrequenz und Trägerfrequenz elektrooptische Mittel für Phasenmodulation aufweisen, wobei die elektrooptischen Mittel für Phasenmodulation in einer transversalen Konfiguration angeordnet sind, in der ein elektrisches Feld in einer Richtung $O_x$ angelegt ist, wobei die elektrooptischen Phasenverschiebungsmittel auf einem optischen Pfad der linear polarisierten Laserimpulse gemäß der Richtung $O_x$ angeordnet sind, um die Phasenverschiebung zwischen Hüllfrequenz und Trägerfrequenz der Ausgangslaserimpulse (40) in Abhängigkeit von der Zeit zu stabilisieren.

**2.** Laser mit ultrakurzen Impulsen gemäß Anspruch 1, **dadurch gekennzeichnet, daß** die elektrooptischen Modulationsmittel einen elektrooptischen Phasenmodulator (5) mit Pockelseffekt in transversaler Konfiguration aufweisen.

3. Laser mit ultrakurzen Impulsen gemäß Anspruch 1, **dadurch gekennzeichnet, daß** er außerdem Mittel für eine winkelmäßige Orientierung der ordentlichen und der außerordentlichen optischen Achse mit Pockelseffekt hinsichtlich einer Polarisationsrichtung der Laserimpulse aufweist.

4. Laser mit ultrakurzen Impulsen gemäß einem der Ansprüche 2 oder 3, **dadurch gekennzeichnet, daß** der Modulator (5) mit Pockelseffekt auf dem optischen Pfad der Verstärkermittel mit Frequenzverschiebung angeordnet ist.

5. Laser mit ultrakurzen Impulsen gemäß Anspruch 1, **dadurch gekennzeichnet, daß** die Streckungsmittel (2) und/oder die Kompressionsmittel (4) wenigstens ein Prisma (43, 44) aufweisen und daß die elektrooptischen Modulationsmittel Elektroden (43a, 43b, 44a, 44b) aufweisen, die jeweils auf Seiten des Prismas (43, 44) und auf Mitteln zum Anlegen eines elektrischen Felds an die Anschlüsse der Elektroden aufgebracht sind, um eine Modulation des Brechungsindex des Prismas (43, 44) zu bewirken.

6. Laser mit ultrakurzen Impulsen gemäß Anspruch 5, **dadurch gekennzeichnet, daß** die Streckungsmittel und/oder die Kompressionsmittel jeweils zwei Prismen (43, 44) aufweisen, die so angeordnet sind, daß sie eine räumliche Verlagerung des optischen Strahls kompensieren und daß die elektrooptischen Modulationsmittel Elektroden (43a, 43b, 44a, 44b) aufweisen, die jeweils auf Seiten der beiden Prismen (43, 44) und auf Mitteln zum Anlegen eines elektrischen Felds an die Anschlüsse der Elektroden der beiden Prismen (43, 44) aufgebracht sind, um eine Modulation des Brechungsindex der beiden Prismen (43, 44) zu bewirken.

7. Laser mit ultrakurzen Impulsen gemäß einem der Ansprüche 1 bis 6, **dadurch gekennzeichnet, daß** die elektrooptischen Modulationsmittel eine Betriebsfrequenz zwischen einigen Hz und mehreren MHZ aufweisen.

8. Laser mit ultrakurzen Impulsen gemäß einem der Ansprüche 1 bis 7, **dadurch gekennzeichnet, daß** er außerdem

    - Mittel zum Messen der Phasenverschiebung zwischen Hüllfrequenz (60) und Trägerfrequenz (50) der Laserausgangsimpulse in Abhängigkeit von der Zeit und
    - eine Rückwirkungsschleife zum Einstellen der durch die elektrooptischen Mittel bewirkten Modulation in Abhängigkeit von der Phasenverschiebung zwischen Hüllfrequenz und Trägerfrequenz

aufweist.

9. Verfahren zum Stabilisieren der Phasenverschiebung zwischen Hüllfrequenz (60) und Trägerfrequenz (50) eines Femtosekundenimpulslasers hoher Energie, wobei das Verfahren die folgenden Schritte aufweist:

    - Erzeugen einer Folge von Lasereingangsimpulsen (10) mit einer Hüllfrequenz (60) und einer Trägerfrequenz (50),
    - Verstärken der Lasereingangsimpulse (10) mit Frequenzverschiebung, mit einem Schritt des zeitlichen Streckens der Lasereingangsimpulse, einem Schritt des optischen Verstärkens der gestreckten Laserimpulse (20) und einem Schritt der zeitlichen Kompression der gestreckten und verstärkten Laserimpulse (30), und
    - wobei der Schritt des Verstärkens mit Phasenverschiebung einen Schritt der Stabilisierung der Phasenverschiebung zwischen Hüllfrequenz (60) und Trägerfrequenz (50) der Laserausgangsimpulse (40) aufweist,

**dadurch gekennzeichnet, daß**

    - der Schritt des Stabilisierens der Phasenverschiebung zwischen Hüllfrequenz und Trägerfrequenz eine elektrooptische Phasenmodulation über ein elektrooptisches Bauteil, das auf einem optischen Pfad der linear polarisierten Laserimpulse in einer Richtung Ox angeordnet ist, und ein Anlegen eines elektrischen Felds in der Richtung Ox an das elektrooptische Bauelement mit Phasenverschiebung aufweist, um die Phasenverschiebung zwischen Hüllfrequenz und Trägerfrequenz der Ausgangslaserimpulse in Abhängigkeit von der Zeit zu stabilisieren.

10. Stabilisationsverfahren gemäß Anspruch 9, **dadurch gekennzeichnet, daß** das Verfahren außerdem

    - einen Schritt des Messens der Phasenverschiebung zwischen Hüllfrequenz und Trägerfrequenz der Laserausgangsimpulse in Abhängigkeit von der Zeit und

- einen Schritt des Einstellens der elektrooptischen Modulation der Phase durch Rückwirkung in Abhängigkeit von der Messung Phasenverschiebung zwischen Hüllfrequenz und Trägerfrequenz aufweist.

**Claims**

1. A high-energy femtosecond pulsed laser, stabilized as regards the phase drift between envelope frequency and carrier frequency, said laser comprising:

   - a source (1) of laser pulses to be amplified, said source (1) being adapted to generate a train of input laser pulses (10) having an envelope frequency (60) and a carrier frequency (50);
   - chirped pulse amplification means comprising stretching means (2) adapted to time stretch the input laser pulses (10), optical amplification means (3, 3a, 3b) adapted to amplify the stretched laser pulses (20) and compression means (4) adapted to time compress the amplified laser pulses (30), and
   - means for controlling the phase drift between envelope frequency and carrier frequency of the output laser pulses,

   **characterized in that**:

   - said means for controlling the phase drift between envelope frequency and carrier frequency comprise electro-optical phase modulation means, said electro-optical phase modulation means being arranged in a transverse configuration wherein an electric field is applied along an Ox direction, said electro-optical phase modulation means are placed on an optical path of the laser pulses linearly polarized in the Ox direction, so as to stabilize the phase drift between envelope frequency and carrier frequency of the output laser pulses (40) as a function of time.

2. The ultrashort pulsed laser according to claim 1, **characterized in that** said electro-optical modulation means comprise a transverse-Pockels-effect electro-optical phase modulator (5).

3. The ultrashort pulsed laser according to one of claims 1 or 2, **characterized in that** it further comprises means for angularly orienting the ordinary and/or extraordinary optical axes of said Pockels-effect modulator (5) relative to a direction of polarization of the laser pulses.

4. The ultrashort pulsed laser according to one of claims 2 or 3, **characterized in that** said Pockels-effect modulator (5) is placed on the optical path of the chirped pulse amplification means.

5. The ultrashort pulsed laser according to claim 1, **characterized in that** said stretching means (2) and/or said compression means (4) comprise at least one prism (43, 44) and **in that** said electro-optical modulation means comprise electrodes (43a, 43b, 44a, 44b) respectively deposited on faces of said prism (43, 44) and means for applying an electric field to the terminals of said electrodes so as to induce a modulation of the refraction index of said prism (43, 44).

6. The ultrashort pulsed laser according to claim 5, **characterized in that** said stretching means and/or said compression means respectively comprise two prisms (43, 44) arranged so as to compensate for a spatial offset of the optical beam and **in that** said electro-optical modulation means comprise electrodes (43a, 43b, 44a, 44b) respectively deposited on faces of said two prisms (43, 44) and means for applying an electric field to the terminals of the electrodes of the two prisms (43, 44) so as to modulate the refraction index of the two prisms (43, 44).

7. The ultrashort pulsed laser according to one of claims 1 to 6, **characterized in that** said electro-optical modulation means have an operating frequency comprised between a few Hz and several MHz.

8. The ultrashort pulsed laser according to one of claims 1 to 7, **characterized in that** it further comprises:

   - means for measuring the phase-drift between envelope frequency (60) and carrier frequency (50) of the output laser pulses as a function of time;
   - a feedback loop so as to adjust the modulation induced by said electro-optical means as a function of the measurement of the phase drift between envelope frequency and carrier frequency.

9. A method of stabilization of the phase drift between envelope frequency (60) and carrier frequency (50) of a high-energy femtosecond pulsed laser, said method comprising the following steps:

- generation of a train of input laser pulses (10) formed of an envelope frequency (60) and a carrier frequency (50);
- chirped pulse amplification of said input laser pulses (10) comprising a step of time stretching of said input laser pulses, a step of optical amplification of said stretched laser pulses (20) and a step of time compression of said stretched and amplified laser pulses (30), and
- said step of chirped pulse amplification comprising a step of stabilization of the phase drift between envelope frequency (60) and carrier frequency (50) of the output laser pulses (40),

**characterized in that**:

- said step of stabilization of the phase drift between envelope frequency and carrier frequency comprises an electro-optical phase modulation of an electro-optical component placed on an optical path of laser pulses linearly polarized in an Ox direction and applying an electric field along the Ox direction to the phase modulation electro-optical component, so as to stabilize the phase drift between envelope frequency and carrier frequency of the output laser pulses as a function of time.

10. The method of stabilization according to claim 9, **characterized in that** said method further comprises:

- a step of measurement of the phase drift between envelope frequency and carrier frequency of the output laser pulses as a function of time, and
- a step of adjustment of the feedback electro-optical phase modulation as a function of said measurement of the phase drift between envelope frequency and carrier frequency.

Figure 1

Figure 2

Figure 3

Figure 4

Figure 5

Figure 6

Fig. 7A          Fig. 7B          Fig. 7C

t (ms)

0    100   200   300    0   100   200   300    0    100   200   300

Figure 8

CEP (rad.)

Modulation
........ 500 Hz
—·—· 100 Hz
— — 50 Hz
——— 10 Hz

5
4
3
2
1
0
-1
-2
-3

0        0,05       0,10       0,15       0,20

t (s.)

Fig. 9A

30

6

43

43a

40

43b

λ1

λ3

44

44b

λ2

4

44a

45

Fig. 9B

43a

43

43b

Figure 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D.STRICKLAND ; G.MOUROU.** Compression of amplified chirped optical pulses. *Optics communications,* 15 Octobre 1985, vol. 55, 447-449
- *Optics communications,* 01 Décembre 1985, vol. 56, 219-221
- Effects of Carrier-Envelope Phase Différences of Few-Optical-Cycle Light Pulses in Single-Shot High-Order-Harmonic Spectra. *Phys. Rev. Letters,* 2003, vol. 91 (21
- **Z. CHANG.** Carrier-envelope phase shift caused by grating-based stretchers and compressors. *Applied Optics,* 2006, vol. 45 (32
- **H.WANG.** Power locking of high-repetition-rate chirped pulse amplifiers. *Applied Physics B,* 07 Septembre 2007, vol. 89 (2-3), 275-279
- **A.BALTUSKA et al.** Controlling the Carrier-Envelope Phase of Ultrashort Light Pulses with Optical Parametric Amplifiers. *Physical Review,* 01 Avril 2002, vol. 88 (13
- **KAKEHATA et al.** Measurements of carrier-envelope phase changes of 100-Hz amplified laser pulses. *Applied Physics B,* 2002, vol. 74, S43-S50
- **JONES et al.** Carrier Envelope Phase Control of Femtosecond Mode-Locked Lasers and Direct Optical Frequency Synthesis. *Science,* 2000, vol. 288, 635
- **C. GREBING et al.** Isochronic and isodispersive carrier-envelope phase-shift compensators. *Applied Physics B,* 2009, vol. 97, 575-581
- **CHANG.** Carrier-envelope phase shift caused by grating-based stretchers and compressors. *Applied Optics,* 2006, vol. 45 (32), 8350-8353
- **P.TOURNOIS.** Acousto-optic programmable dispersive filter for adaptive compensation of group delay time dispersion in laser systems. *Optics communications,* 1997, vol. 140, 245-249
- **M.KAKEHATA et al.** Use of a 4f pulse shaper as an active carrier-envelope phase shifter. *Conference paper, CLEO,* 2004